# EUROPEAN PATENT SPECIFICATION

(11) **EP 1 318 672 B1**
(45) Date of publication and mention of the grant of the patent: **26.08.2009**
(21) Application number: 01410159.6
(22) Date of filing: 07.12.2001
(51) Int. Cl.: H04N 5/445, H04N 7/088

(54) **Method and apparatus for displaying definitions of selected words in a television programme**
Verfahren und Vorrichtung zur Anzeige von Definitionen von ausgewählte Begriffe in einem Fernsehprogram
Procédé et appareil pour l'affichage des definitions des mots selectionés dans une programme de télévision

(43) Date of publication of application: 11.06.2003
(73) Proprietor: Accenture Global Services GmbH, 8200 Schaffhausen (CH)
(72) Inventor: Illsley, Martin, 06520 Magagnosc (FR); Stromme, Oyvind, 0571 Oslo (NO)
(74) Representative: de Beaumont, Michel

(56) References cited:
- US-A- 5 543 851

## Description

### FIELD OF THE INVENTION

The present invention relates to TV programs, and more specifically to a method and system for assisting the watcher of a TV program in catching information or explanation about words used in a current program.

### BACKGROUND

The watcher of a TV program may not understand some words that he hears or reads. For example, some words used in a scientific TV program may not be understood by all the watchers. Further, backgrounds of the watchers are different. So, the words that are not understood are not the same for all the watchers of a TV program.

To get an explanation about a word that he does not understand on a TV program, a watcher could of course look it up in a dictionary while watching TV. Most often, the time needed to find explanation makes that the watcher misses an important part of the TV program.

Some interactive TV programs already exist, in which a watcher can press a dedicated button to switch to another channel dedicated to the field of the TV program. Such a channel broadcasts, in loop, explanation about topics chosen by the broadcaster and contained in the TV program. A drawback is that the explanations are broadcasted as goes the TV program and, when switching to the explanation channel, the watcher has to read explanation of other topics before the information he is looking for comes again in the broadcasted loop. During that time, the normal TV program goes on and the watcher looses information. The broadcasted explanation channel cannot be personalized for each watcher. Further, it is restricted to topics rather than words due to the limited number of available channels for broadcasting explanation, and a same channel may contain explanation about several TV programs, which is not useful.

There is a need for an automated method and system for assisting a watcher of a TV program in getting or catching information or explanation about words that he does not understand.

A purpose of the present invention is to provide a method and a system for automatically extracting words of a TV program which may not be understood by the watchers, and to give them the possibility of obtaining an explanation for some of these words.

A technical problem exists in selecting the words which have to be proposed to the watchers for explanation, taking into account the fact that the different person does have different cultural background.

Another technical problem exists in obtaining the explanation about words or topics without using specific broadcasting channels.

Another purpose of the present invention is to provide a computer based apparatus and method to be associated with a screen adapted to display TV programs for giving a watcher the possibility of getting information and/or explanation about a word that he hears or reads in the TV program and about which he wants more information.

Another purpose of the present invention is to provide a system and method which do not require the watcher to type the searched words on a keyboard.

US 5,543,851 discloses a system for providing definitions of user-selected closed-caption words, retrieved from a dictionary stored in an internal memory.

### BRIEF SUMMARY OF THE INVENTION

To attain the above purposes and others, the present invention provides a computer based method for generating information about words used in a TV program or the like, comprising the steps of:
- automatically extracting a list of relevant words in a TV program on the basis of the occurrences of the words in that TV program, said extraction being updated in real time;
- displaying the extracted words on the TV screen;
- waiting for a selection of one of the extracted words by the watcher;
- searching information about said selected word; and
- displaying this information on the TV screen.

According to the present invention, the words appearing in a TV program are extracted on the basis of their number of occurrences to determine the words for which an explanation will be proposed. In other words, one defines a window of number of occurrences to extract the words to be displayed for selection by the watcher.

According to a first embodiment, the window of occurrences is limited to two predetermined thresholds which may be fixed by the manufacturer of the system, downloaded by the broadcaster into the device, or chosen by the watcher.

According to another preferred embodiment, an auto-adaptation of the windows of occurrences is provided. In other words, the low and high thresholds of the windows are automatically adapted in real time as goes the TV program. Such an auto-adaptation can be based on a maximum predetermined number of words to be displayed. It can also be based on percentages of words among the total number of extracted words.

Preferably, the extracted words are chosen among a pre-list of words stored with their occurrences in the TV program and in which predetermined common words are already eliminated.

The extracted words of a TV program are preferentially displayed on at least a dedicated line superposed to the TV program, in the form of a list of words. The list is preferably a scrolling list for displaying more words. The watcher may use any selection device like a keyboard or a pointing device to select an extracted word for which he wants information.

The information or explanation about the selected words may originate from different sources. For example, one may use a computerized dictionary which can be internal or external to the system. Using an external dictionary is preferred because it allows an updating of the information. For example, the external dictionary may be constituted by a computerized dictionary available on the Internet or on any specific network.

According to a preferred embodiment of the present invention, the search of the explanation about a selected word in a dictionary takes not only into account the word itself but also the field in which it was used. Indeed, a same word may have several meanings depending on the field. When automatically extracting the words from a TV program, it is useful to know the topic of the TV program whereby the appropriate meaning of the word(s) can be selected.

Conventionally, dialogs of TV programs are also broadcasted in written format broadcasted to provide "Teletext" information. The Teletext format which is present in the flow of the TV program is part of a specific sub-channel associated with each broadcasted TV channel. According to a preferred embodiment of the present invention, this available Teletext information is used to search and extract the words considered as relevant to be displayed for selection to the watcher.

### DESCRIPTION OF THE DRAWINGS

These purposes, features and advantages of preferred, non limiting, embodiments of the present invention will be described by way of examples with reference to the accompanying drawings, in which:
figure 1 schematically represents the main elements of one exemplary embodiment of the system of the present invention;
figure 2 represents a TV image illustrating one exemplary embodiment of the method according to the present invention;
figure 3 is a flowchart of the main steps of one exemplary embodiment of the method of word extraction according to the present invention; and
figure 4 is a flowchart of the main steps of one exemplary embodiment of catching word information according to the present invention.

For clarity, only the elements and steps useful to the understanding of the invention have been shown in the drawings and will be disclosed hereafter. Especially, details of the programming steps according to the system of the invention will not be detailed as it will already be known to those skilled in the art.

### DETAILED DESCRIPTION

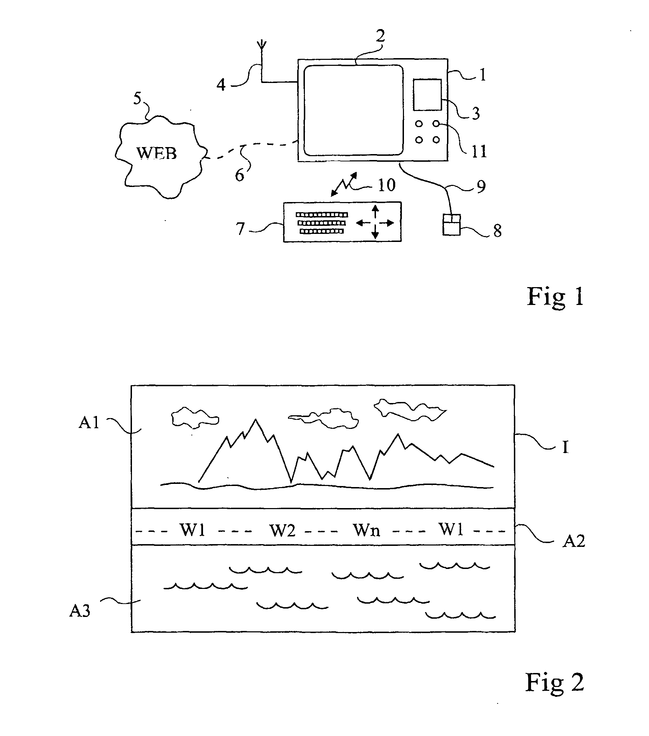

With reference to figure 1, one exemplary embodiment of a system for generating information about words used in a TV program according to the principles of the present invention includes a general purpose TV set 1 (or any analog system like, for example, a personal computer equipped with a tuning card). The TV set comprises a screen 2 and the conventional equipment to receive and display TV programs and, for the implementation of the present invention, a processing unit 3. The processing unit 3 may be a circuit dedicated to the implementation of the present invention or a general purpose central processing unit like a CPU of a personal computer and is associated with the necessary elements (memories, I/O devices) to execute a program implementing the method of the present invention and store the corresponding data.

TV set 1 is linked to a reception element 4 which might be an antenna or any connection to a wired or wireless broadcasting network and, preferably, comprises an access to Internet (WEB) 5. Such an access may be through a telephone line 6 or any conventional link.

To implement the present invention, the TV set 1 is equipped with a selection tool to be used by the watcher for selecting the words for which he wants more information as it will be disclosed later. For example, the selection tool may be a keyboard 7 or a pointing device like a mouse 8. Keyboard 7 and/or mouse 8 may communicate with the central processing unit 3 of the TV set through a wired 9 or wireless 10 link.

Alternatively, the selection tool may be included in the TV set, or may correspond to conventional buttons 11 of the TV set or of a remote control device (not shown) re-affected to implement the invention.

With reference to figure 2, an image I displayed on the TV set 1 comprises, for what concerns the invention, three areas (other areas may be provided in the screen, for example in a multi-windows display on a PC screen). A first area A1 corresponds to the part of the screen dedicated to displaying the TV program. When the watcher does not select a word to get a specific explanation, the area A1 preferably occupies the full image I.

According to the present invention, the words W1, W2, ..., Wn extracted automatically from the TV program are displayed, preferably on a scrolling form, on a second area A2. Area A2 may comprise several lines (or columns) but preferably corresponds to a single line (or column) of the screen, scrolling the words W1, W2, ..., Wn.

A third area A3 of the image I is dedicated to displaying the information or explanation collected according to the invention about a word selected by the user. The area A3 is preferably a temporary area. In other words, the surface of area A3 is affected to the area A1 for the TV program except during the time necessary to display information about selected words.

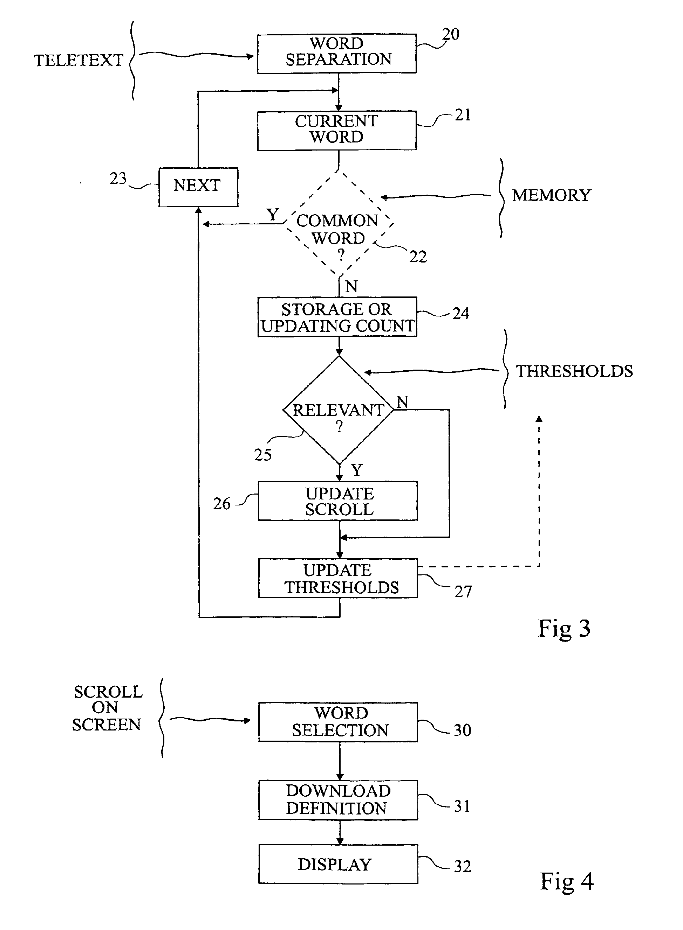

Figure 3 represents a schematic flowchart of the steps of generating the scroll line A2 of figure 2, according to a preferred embodiment of the present invention.

According to this embodiment, the Teletext information associated with the TV program is used to get the exhaustive list of words of the TV program. Alternatively, one can use other sources to obtain the words of the TV program. For example, voice recognition means may be used to identify all the different words pronounced by the persons appearing in the TV program.

The first step of the method of the present invention is to obtain a list of words to be processed, i.e. a pre-list of words among which the system will extract and update, in real time as the TV program goes on, the words to be displayed in area A2 for selection. Therefore, after having separated the words from the Teletext format (step 20, WORD SEPARATION), the system extracts the current word (step 21, CURRENT WORD).

Preferably, a list of common words is pre-established and stored in a memory of the system for containing the words which are to be considered obviously as irrelevant whatever will be the TV program (for example the common verbs, articles, conjunctions, etc.). According to this embodiment, the current word is searched in that list (test 22, COMMON WORD).

If the current word is a common one, the system increments by one its number of occurrences, selects the next word (bloc 23, NEXT) and returns to the bloc 21 for the new current word.

If not, or if the test 22 is omitted, the current word is taken into account (bloc 24, STORAGE OR UPDATING COUNT) in the pre-list of words to be processed in order to determine their relevance. The pre-list contains also the number of occurrences of the stored words. If it is the first occurrence of the word in the TV program, the current word is added to the pre-list. If the word is already present in the pre-list, its number of occurrences is incremented.

Then, again in real time for each word, the system determines if the current word has to be considered as relevant (bloc 25, RELEVANT?). If yes, the scroll line (area A2) is updated to incorporate the current word (and eventually suppress another word from the extracted list).

According to the present invention, the relevance of a word is based on the number of occurrences of that word in the TV program. The system uses two thresholds between which the number of occurrences is considered as representing a relevant word. Accordingly, the words that appear very seldom are not selected as a watcher will not be interested in words that occur rarely. Also, the words that occur very frequently are eliminated as such words are likely to be common words or words that are well explained in the TV program of interest. The two thresholds define a window of numbers of occurrences for relevant words.

According to a first embodiment, the two thresholds are predetermined, for example, fixed by the manufacturer of the system, downloaded by the broadcaster into the device, or chosen by the watcher.

According to a preferred embodiment, the thresholds are updated along with the TV program, i.e. the number of occurrences determining the relevance of the word is modified as goes the TV program to be auto-adapted to the size of the pre-list which grows up along with the TV program.

For the beginning of the TV program, one can either wait for having a sufficient number of words to display (using a threshold in time or in number of occurrences) or start with the beginning of the TV program. In that last case, the first displayed words may appear as irrelevant for the watcher. However, words which are irrelevant will quickly disappear from the scroll list due to the auto-adaptation of the thresholds.

According to a first embodiment, the auto-adaptation is based on a number of words to be displayed on the screen. For example, if the number of words to be displayed is twenty, the list of extracted words contains the twenty words of the pre-list which are central in the pre-list when sorted by number of occurrences.

According to a second embodiment of the invention, the window of relevant numbers of occurrences corresponds to intermediate values of occurrences contained in the pre-list after eliminating a percentage of the less and most frequent words with respect to the total number of words of the pre-list. For example, assuming that the percentages are thirty percent for the less frequent words and fifty percent for the most frequent words, and that the current number of words contained in the pre-list is 110, the thresholds correspond to number of occurrences of the words of rank 33 and 55 of the pre-list sorted by number of occurrences increasingly.

The two above preferred embodiments may also be combined.

If the current word is considered as relevant, the list of extracted words is updated and the display of area A2 is also modified (bloc 26, UPDATE SCROLL).

If not, the system goes directly to the step of updating the thresholds (bloc 27, UPDATE THRESHOLDS) for taking into account the increase of number of word occurrences.

Alternatively, the thresholds are not updated for each loop of the method (i.e. for each word processed) but periodically after a predetermined number of words.

Preferably, the list of extracted words is also updated based on the time of presence of the words in the scroll line, to eliminate the too old words.

The system considers then the next word (bloc 23) and returns to the bloc 21 with this new current word.

Figure 4 represents a schematic flowchart of the steps of catching word information according to a preferred embodiment of the present invention.

Once the words are displayed on the scroll line(s) of the screen, the user may select a word (step 30, WORD SELECTION) for which he wants a definition or more information. The system of the present invention then downloads the required definition (step 31, DOWNLOAD DEFINITION) and displays the information (step 32, DISPLAY) on the screen in the area A3. The duration of the display of information may be prefix and/or the display can disappear when the watcher presses a dedicated button.

Different ways may be provided for searching the complementary information to be displayed on the screen.

According to a first embodiment, the TV set is linked to a local dictionary (that embodiment applies in particular to a personal computer) and the definition of the words is searched in that dictionary.

According to another embodiment, one provides a link to an external network (for example, Internet) to download the information about the word. If using a network like Internet, the search engines to be used for searching information about the words are pre-selected in order to avoid too long search for each selected word.

According to another embodiment, one uses a specific dictionary prepared by the broadcaster and available, for example, on a specific network or on a specific broadcasted channel.

The word selection is, for example, performed by the watcher either through a mouse 8 and a corresponding pointer on the screen, or through the keyboard 7 and more specifically its arrow buttons.

The dictionaries or encyclopedia used to find the information relative to the selected words may be any type of dictionary. For example, the broadcaster may include in the flux of Teletext information about the field or domain of the TV program allowing the search engine of the system of the present invention to select the correct meaning of a selected word. The information relative to the field can also be used to select some specific dictionaries according to the topics of the TV program.

An advantage of the present invention is that it gives more information to a watcher of the TV program with customized information. Indeed, only if there are some words that a watcher does not understand, the third area A3 of the screen will appear to display the desired information.

Further, storage of words to be considered as irrelevant could be updated, on the user side, to automatically exclude some words chosen by the watcher. That storage may be done with a specific selection action of the user on the scrolling list. Then, when a TV program of the same field is processed by the system, these words will be ignored automatically in the test of common words (22, Fig. 3).

Another advantage of the present invention is that the relevant list of words displayed on the screen is updated in real time. Such an updating not only concerns adding some supplemental words, but also suppressing other words either because these words are out of the selecting window or because the words are present for a too long time.

Another advantage of the present invention is that the auto-adapting of the thresholds gives a system which can work from the beginning to the end of a TV program.

Having thus described at least one illustrative embodiment of the invention, various alterations, modifications and improvements will readily occur to those skilled in the art. In particular, the implementation of the present invention on the basis of the functional explanation above is in the ability of one skilled in the art. Further, the selection of a type of dictionary and the threshold chosen according to the present invention may be modified according to the application. Such alterations, modifications, and improvements are intended to be within the scope of the invention. Accordingly, the foregoing description is by way of example only and is not intended to be limiting. The invention is limited only as defined in the following claims and the equivalents thereto.

## Claims

1. A method for generating information about words used in a TV program, comprising the steps of:
detecting automatically the words used in said TV program;
storing automatically a pre-list of the detected words with their number of occurrences during the TV program;
extracting automatically, from said pre-list, a list of relevant words in the TV program on the basis of their number of occurrences, said extraction being updated in real time;
displaying the extracted list of relevant words on the TV screen;
waiting for a selection of one of the extracted words by a user;
searching automatically information about said selected words; and
displaying this information on the screen.

2. The method of claim 1, wherein the pre-list excludes common words previously stored.

3. The method of claim 1, wherein the number of occurrences to consider a word as relevant is updated in real time.

4. The method of claim 3, wherein a word is considered as relevant if its number of occurrences is comprised between two thresholds.

5. The method of claim 4, wherein the thresholds are auto-adapted during the TV program.

6. The method of claim 1, wherein the information about a selected word is searched in a remote dictionary or the like.

7. The method of claim 6, wherein the information about a selected word is searched trough the Internet.

8. The method of claim 7, wherein the search is made on a pre-selected list of web sites.

9. The method of claim 1, wherein the search of information takes into account the field of the TV program, said field being broadcasted with the TV program to be extracted automatically with the relevant words.

10. The method of claim 1, wherein the pre-list is updated with words selected by the user.

11. A System for generating information about words used in a TV program, comprising:
a TV set (1) or the like for displaying a TV program;
a processing unit (3) to extract automatically a list of relevant words in the TV program on the basis of the frequency of occurrences of the words;
a selecting tool (7, 8) through which a watcher is capable of selecting one of the extracted words; and
a link (6) to an electronic dictionary to search information about the selected word.

12. The system of claim 11, wherein said processing unit (3) comprises at least a memory for storing a pre-list of detected words on the TV program and their number of occurrences.

13. The system of claim 11, wherein the link to the dictionary is a link to a remote network.

14. The system of claim 11, wherein the information about the selected word is displayed on a dedicated area (A3) of the screen.

15. The system of claim 11, wherein the extracted words considered as relevant are displayed on the screen in a dedicated area (A2) of the screen on which is displayed the TV program.

16. The system of claim 15, wherein the display of the extracted word is scrolled.

17. The system of claim 11, also comprising means to extract words from the Teletext channel of the TV program.

## Patentansprüche

1. Verfahren zum Erzeugen von Informationen über Begriffe, die in einem Fernsehprogramm verwendet werden, das folgende Schritte aufweist:
automatisches Detektieren von Begriffen, die in dem Fernsehprogramm verwendet werden;
automatisches Speichern einer vorläufigen Liste bzw. Vorliste der detektierten Begriffe mit ihrer Auftrittshäufigkeit während des Fernsehprogramms;
automatisches Extrahieren einer Liste relevanter Begriffe in dem Fernsehprogramm aus der vorläufigen Liste, und zwar basierend auf ihrer Auftrittshäufigkeit, wobei die Extraktion in Echtzeit aktualisiert wird; Anzeigen der extrahierten Liste relevanter Begriffe auf dem Fernsehbildschirm;
Warten auf eine Auswahl eines der extrahierten Begriffe durch den Nutzer; automatisches Suchen nach Informationen über die ausgewählten Begriffe; und
Anzeigen dieser Informationen auf dem Bildschirm.

2. Verfahren nach Anspruch 1, wobei die vorläufige Liste geläufige Begriffe ausschließt, die zuvor gespeichert wurden.

3. Verfahren nach Anspruch 1, wobei die Auftrittshäufigkeit, durch die berücksichtigt wird, ob ein Begriff relevant ist, in Echtzeit aktualisiert wird.

4. Verfahren nach Anspruch 3, wobei ein Begriff als relevant betrachtet wird, wenn seine Auftrittshäufigkeit zwischen zwei Schwellen liegt.

5. Verfahren nach Anspruch 4, wobei die Schwellen während des Fernsehprogramms automatisch angepasst werden.

6. Verfahren nach Anspruch 1, wobei die Information über einen ausgewählten Begriff in einem entfernten bzw. getrennt vorliegenden Verzeichnis oder Ähnlichem gesucht wird.

7. Verfahren nach Anspruch 6, wobei die Information über einen ausgewählten Begriff über das Internet gesucht wird.

8. Verfahren nach Anspruch 7, wobei die Suche auf einer vorausgewählten Liste von Websites durchgeführt wird.

9. Verfahren nach Anspruch 1, wobei die Suche nach Informationen das Sachgebiet des Fernsehprogramms berücksichtigt, wobei das Sachgebiet mit dem Fernsehprogramm übertragen wird, so dass es automatisch mit den relevanten Begriffen extrahiert wird.

10. Verfahren nach Anspruch 1, wobei die vorläufige Liste mit Begriffen aktualisiert wird, die der Nutzer auswählt.

11. System zum Erzeugen von Informationen über Begriffe, die in einem Fernsehprogramm verwendet werden, das Folgendes aufweist:
ein Fernsehgerät (1) oder Ähnliches zum Anzeigen eines Fernsehprogramms;
eine Verarbeitungseinheit (3) zum automatischen Extrahieren einer Liste relevanter Begriffe in dem Fernsehprogramm basierend auf der Auftrittshäufigkeit der Begriffe;
Auswahlmittel (7,8), durch welches ein Zuschauer in der Lage ist, einen der extrahierten Begriffe auszuwählen; und
eine Verbindung (6) zu einem elektronischen Verzeichnis, um Informationen über den ausgewählten Begriff zu suchen.

12. System nach Anspruch 11, wobei die Verarbeitungseinheit (3) mindestens einen Speicher aufweist zum Speichern einer vorläufigen Liste von detektierten Begriffen in dem Fernsehprogramm und ihren Auftrittshäufigkeiten.

13. System nach Anspruch 11, wobei die Verbindung mit dem Verzeichnis eine Verbindung zu einem entfernten Netzwerk ist.

14. System nach Anspruch 11, wobei die Informationen über den ausgewählten Begriff in einem zugeordneten Bereich (A3) des Bildschirms angezeigt werden.

15. System nach Anspruch 11, wobei die extrahierten Begriffe, die als relevant betrachtet werden, auf dem Bildschirm in einem zugeordneten Bereich (A2) des Bildschirms angezeigt werden, auf dem das Fernsehprogramm angezeigt wird.

16. System nach Anspruch 15, wobei die Anzeige des extrahierten Begriffs durchläuft bzw. gescrollt wird.

17. System nach Anspruch 11, das auch Mittel aufweist, um Begriffe aus dem Videotextkanal des Fernsehprogramms zu extrahieren.

## Revendications

1. Procédé pour générer des informations concernant des mots utilisés dans un programme de télévision, comprenant les étapes suivantes :
détecter automatiquement les mots utilisés dans le programme de télévision ;
mémoriser automatiquement une pré-liste des mots détectés avec leur nombre d'occurrences pendant le programme de télévision ;
extraire automatiquement, de la pré-liste, une liste de mots pertinents dans le programme de télévision sur la base de leur nombre d'occurrences, l'extraction étant mise à jour en temps réel ;
afficher la liste extraite de mots pertinents sur l'écran de télévision ;
attendre une sélection d'un des mots extraits par un utilisateur ;
rechercher automatiquement des informations concernant les mots sélectionnés ; et
afficher ces informations sur l'écran.

2. Procédé selon la revendication 1, dans lequel la pré-liste exclut des mots communs précédemment mémorisés.

3. Procédé selon la revendication 1, dans lequel le nombre d'occurrences pour considérer qu'un mot est pertinent est mis à jour en temps réel.

4. Procédé selon la revendication 3, dans lequel un mot est considéré comme pertinent si son nombre d'occurrences est compris entre deux seuils.

5. Procédé selon la revendication 4, dans lequel les seuils sont auto-adaptés pendant le programme de télévision.

6. Procédé selon la revendication 1, dans lequel les informations concernant un mot sélectionné sont recherchées dans un dictionnaire distant ou similaire.

7. Procédé selon la revendication 6, dans lequel les informations concernant un mot sélectionné sont recherchées par l'intermédiaire du réseau Internet.

8. Procédé selon la revendication 7, dans lequel la recherche est faite dans une liste présélectionnée de sites de la toile mondiale.

9. Procédé selon la revendication 1, dans lequel la recherche d'informations prend en compte le domaine du programme de télévision, ledit domaine étant diffusé avec le programme de télévision pour être extrait automatiquement avec les mots pertinents.

10. Procédé selon la revendication 1, dans lequel la pré-liste est mise à jour avec des mots sélectionnés par l'utilisateur.

11. Système pour générer des informations concernant des mots utilisés dans un programme de télévision, comprenant :
un poste de télévision (1) ou similaire pour afficher un programme de télévision ;
un module de traitement (3) pour extraire automatiquement une liste de mots pertinents dans le programme de télévision sur la base de la fréquence d'occurrence des mots ;
un outil de sélection (7, 8) par l'intermédiaire duquel un téléspectateur est capable de sélectionner l'un des mots extraits ; et
une liaison (6) vers un dictionnaire électronique pour rechercher des informations concernant le mot sélectionné.

12. Système selon la revendication 11, dans lequel le module de traitement (3) comprend au moins une mémoire pour mémoriser une pré-liste de mots détectés dans le programme de télévision et leur nombre d'occurrences.

13. Système selon la revendication 11, dans lequel la liaison vers le dictionnaire est une liaison vers un réseau distant.

14. Système selon la revendication 11, dans lequel les informations concernant le mot sélectionné sont affichées dans une zone dédiée (A3) de l'écran.

15. Système selon la revendication 11, dans lequel les mots extraits considérés comme pertinents sont affichés sur l'écran dans une zone dédiée (A2) de l'écran sur lequel est affiché le programme de télévision.

16. Système selon la revendication 15, dans lequel on fait défiler l'affichage du mot extrait.

17. Système selon la revendication 11, comprenant aussi des moyens pour extraire des mots à partir du canal de télétexte du programme de télévision.
